(19) Europäisches Patentamt
European Patent Office
Office européen des brevets

(11) EP 0 944 318 B1

(12) EUROPÄISCHE PATENTSCHRIFT

(45) Veröffentlichungstag und Bekanntmachung des Hinweises auf die Patenterteilung:
**09.04.2003 Patentblatt 2003/15**

(21) Anmeldenummer: **97952813.0**

(22) Anmeldetag: **27.11.1997**

(51) Int Cl.[7]: **A01N 43/88**
// (A01N43/88, 57:12, 55:02, 53:00, 51:00, 47:44, 47:34, 47:30, 47:12, 47:04)

(86) Internationale Anmeldenummer:
**PCT/EP97/06616**

(87) Internationale Veröffentlichungsnummer:
**WO 98/025465 (18.06.1998 Gazette 1998/24)**

(54) **FUNGIZIDE WIRKSTOFFKOMBINATIONEN**

FUNGICIDAL ACTIVE SUBSTANCE COMBINATIONS

COMBINAISONS DE PRINCIPES ACTIFS FUNGICIDES

(84) Benannte Vertragsstaaten:
**AT BE CH DE DK ES FR GB GR IE IT LI NL PT**

(30) Priorität: **10.12.1996 DE 19651217**
**11.02.1997 DE 19705159**
**11.09.1997 DE 19739982**

(43) Veröffentlichungstag der Anmeldung:
**29.09.1999 Patentblatt 1999/39**

(73) Patentinhaber: **Bayer CropScience AG**
**40789 Monheim (DE)**

(72) Erfinder:
- **STENZEL, Klaus**
**D-40595 Düsseldorf (DE)**
- **DUTZMANN, Stefan**
**D-40764 Langenfeld (DE)**
- **HEINEMANN, Ulrich**
**D-42799 Leichlingen (DE)**

(56) Entgegenhaltungen:
**WO-A-97/27189**

Bemerkungen:

Die Akte enthält technische Angaben, die nach dem Eingang der Anmeldung eingereicht wurden und die nicht in dieser Patentschrift enthalten sind.

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

Printed by Jouve, 75001 PARIS (FR)

EP 0 944 318 B1

## Beschreibung

Die vorliegende Anmeldung betrifft neue Wirkstoffkombinationen, die aus einer Verbindung der Formel I

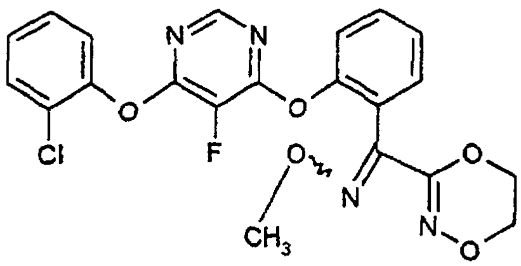

(I)

einerseits und weiteren bekannten fungiziden Wirkstoffen andererseits bestehen und sehr gut zur Bekämpfung von phytopathogenen Pilzen geeignet sind.

Es ist bereits bekannt, daß die Verbindung der Formel (I) fungizide Eigenschaften besitzt (DE-19 602 095). Die Wirksamkeit dieses Stoffes ist gut; sie läßt jedoch bei niedrigen Aufwandmengen in manchen Fällen zu wünschen übrig.

Ferner ist schon bekannt, daß zahlreiche Azol-Derivate, aromatische CarbonsäureDerivate, Morpholin-Verbindungen und andere Heterocyclen zur Bekämpfung von Pilzen eingesetzt werden können (vgl. K.H. Büchel "Pflanzenschutz und Schädlingsbekämpfung" Seiten 87, 136, 140, 141 und 146 bis 153, Georg Thieme Verlag, Stuttgart 1977). Die Wirkung der betreffenden Stoffe ist aber bei niedrigen Aufwandmengen nicht immer befriedigend.

Es wurde nun gefunden, daß die neuen Wirkstoffkombinationen aus einer Verbindung der Formel I

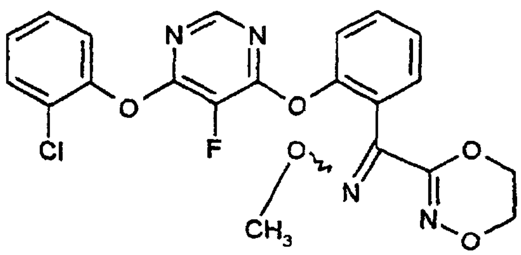

(I)

und mindestens einem Mischpartner

(A) Antracol (Propineb) und/oder
(B) Euparen (Dichlofluanid) und/oder Euparen M (Tolylfluanid) und/oder
(C) Bitertanol und/oder
(D) Tebuconazol und/oder
(E) Triadimefon und/oder
(F) Triadimenol und/oder
(G) Imidacloprid und/oder
(H) Sumisclex und/oder
(II) Mancozeb und/oder
(K) Folpet (Phaltan) und/oder
(L) Dimetomorph und/oder
(M) Cymoxanil und/oder
(N) Metalaxyl und/oder
(O) Aliette (Fosetyl-Al) und/oder
(P) Famoxadone und/oder
(Q) Pyrimethanil und/oder
(R) Cyprodinyl und/oder

(S) Mepanipyrim und/oder
(T) Kresoximmethyl und/oder
(U) Azoxystrobin und/oder
(V) Epoxiconazole und/oder
(W) Metconazole und/oder
(X) Fluquinconazole und/oder
(Y) Fludioxonil und/oder
(Z) Fenpiclonil und/oder
(α) Guazatine und/oder
(β) Bion und/oder
(χ)

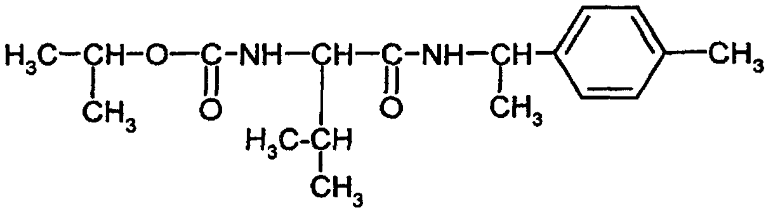

und/oder
(δ) 8-t-Butyl-2-(N-ethyl-N-n-propyl-amino)-methyl-1,4-dioxaspiro[5,4]-decan und/oder
(ε) 2,3-Dichlor-4-(1-methylcyclohexylcarbonylamino)-phenol und/oder
(ω) N-(R)-[1-(4-Chlor-phenyl)-ethyl]-2,2-dichlor-1-ethyl-3t-methyl-1rcyclopropan-carbonsäureamid und/oder
(π) Fluazinam und/oder
(III) Captan und/oder
(IV) Monceren (Pencycuron) und/oder

sehr gute fungizide, sich synergistisch ergänzende Eigenschaften besitzen.

Der Wirkstoff der Formel (I) ist bekannt (DE-19 602 095). Die in den erfindungsgemäßen Kombinationen außerdem vorhandenen Komponenten sind ebenfalls bekannt.

Die erfindungsgemäßen Wirkstoffkombinationen enthalten neben dem Wirkstoff der Formel (I) mindestens einen Wirkstoff der Verbindungen (A) bis (VI). Darüber hinaus können auch weitere fungizid wirksame Zumischkomponenten enthalten sein.

Wenn die Wirkstoffe in den erfindungsgemäßen Wirkstoffkombinationen in bestimmten Gewichtsverhältnissen vorhanden sind, zeigt sich der synergistische Effekt besonders deutlich. Jedoch können die Gewichtsverhältnisse der Wirkstoffe in den Wirkstoffkombinationen in einem relativ großen Bereich variiert werden. Im allgemeinen entfallen auf 1 Gewichtsteil an Wirkstoff der Formel (I) 0,01 bis 50, vorzugsweise 0,25 bis 20 Gewichtsteile der Verbindungen (A) bis (IV).

Insbesondere entfallen pro Gewichtsteil der Verbindung der Formel (I) die angegebenen Gewichtsteile für folgende Mischungspartner:

| | | | |
|---|---|---|---|
| (A) | 1:1 bis 1:50 | vorzugsweise | 1:5 bis 1:20, |
| (B) | 1:1 bis 1:50 | vorzugsweise | 1:1 bis 1:20, |
| (C) | 10:1 bis 1:10 | vorzugsweise | 5:1 bis 1:5, |
| (D) | 10:1 bis 1:10 | vorzugsweise | 5:1 bis 1:5, |
| (E) | 10:1 bis 1:10 | vorzugsweise | 5:1 bis 1:5, |
| (F) | 10:1 bis 1:10 | vorzugsweise | 5:1 bis 1:5, |
| (G) | 20:1 bis 1:20 | vorzugsweise | 10:1 bis 1:10, |
| (H) | 10:1 bis 1:10 | vorzugsweise | 5: bis 1:5, |
| (II) | 1:1 bis 1:50 | vorzugsweise | 1:5 bis 1:20, |
| (K) | 1:1 bis 1:50 | vorzugsweise | 1:5 bis 1:20, |
| (L) | 10:1 bis 1:10 | vorzugsweise | 5:1 bis 1:5, |
| (M) | 10:1 bis 1:10 | vorzugsweise | 5:1 bis 1:5, |
| (N) | 10:1 bis 1:10 | vorzugsweise | 5:1 bis 1:5, |

(fortgesetzt)

| | | | |
|---|---|---|---|
| (O) | 10:1 bis 1:50 | vorzugsweise | 1:1 bis 1:10, |
| (P) | 10:1 bis 1:10 | vorzugsweise | 5:1 bis 1:5, |
| (Q) | 5:1 bis 1:20 | vorzugsweise | 1:1 bis 1:10, |
| (R) | 5:1 bis 1:20 | vorzugsweise | 1:1 bis 1:10, |
| (S) | 5:1 bis 1:20 | vorzugsweise | 1:1 bis 1:10, |
| (T) | 10:1 bis 1:10 | vorzugsweise | 5:1 bis 1:5, |
| (U) | 10:1 bis 1:10 | vorzugsweise | 5:1 bis 1:5, |
| (V) | 10:1 bis 1:10 | vorzugsweise | 5:1 bis 1:5, |
| (W) | 10:1 bis 1:10 | vorzugsweise | 5:1 bis 1:5, |
| (X) | 10:1 bis 1:10 | vorzugsweise | 5:1 bis 1:5, |
| (Y) | 10:1 bis 1:10 | vorzugsweise | 5:1 bis 1:5, |
| (Z) | 10:1 bis 1:10 | vorzugsweise | 5:1 bis 1:5, |
| (α) | 10:1 bis 1:10 | vorzugsweise | 5:1 bis 1:5, |
| (β) | 50:1 bis 1:50 | vorzugsweise | 20:1 bis 1:10, |
| (χ) | 10:1 bis 1:10 | vorzugsweise | 5:1 bis 1:5, |
| (δ) | 10:1 bis 1:20 | vorzugsweise | 5:1 bis 1:10, |
| (ε) | 10:1 bis 1:10 | vorzugsweise | 5:1 bis 1:5, |
| (ω) | 10:1 bis 1:10 | vorzugsweise | 5:1 bis 1:5. |
| (π) | 10:1 bis 1:10 | vorzugsweise | 5:1 bis 1:5 |
| (III) | 5:1 bis 1:50 | vorzugsweise | 1:1 bis 1:20 |
| (IV) | 10:1 bis 1:10 | vorzugsweise | 4:1 bis 1:4 |

Die erfindungsgemäßen Wirkstoffkombinationen besitzen sehr gute fungizide Eigenschaften und lassen sich vor allem zur Bekämpfung von phytopathogenen Pilzen, wie Plasmodiophoromycetes, Oomycetes, Chytridiomycetes, Zygomycetes, Ascomycetes, Basidiomycetes, Deuteromycetes usw. einsetzen.

Die erfindungsgemäßen Wirkstoffkombinationen eignen sich besonders gut zur Bekämpfung von Getreidekrankheiten, wie Erysiphe, Cochliobolus, Pyrenophora, Rhynchsporium, Septoria spp., Fusarium spp. Pseudocercosporella und Leptosphaeria und zur Bekämpfung von Pilzbefall an Nichtgetreidekulturen wie Wein; Obst, Gemüse, beispielsweise Phytophthora, Plasmopara, Pythium, sowie Echte Mehltaupilze wie zum Beispiel Sphaerotheca oder Uncinula und Blattfleckenerreger wie Venturia, Altemaria und Septoria sowie Rhizoctonia, Botrytis, Sclerotinia und Sclerotium.

Die gute Pflanzenverträglichkeit der Wirkstoffkombinationen in den zur Bekämpfung von Pflanzenkrankheiten notwendigen Konzentrationen erlaubt eine Behandlung von oberirdischen Pflanzenteilen, von Pflanz- und Saatgut, und des Bodens.

Die erfindungsgemäßen Wirkstoffkombinationen können in die üblichen Formulierungen übergeführt werden, wie Lösungen, Emulsionen, Suspensionen, Pulver, Schäume, Pasten, Granulate, Aerosole, Feinstverkapselungen in polymeren Stoffen und in Hüllmassen für Saatgut, sowie ULV-Formulierungen.

Diese Formulierungen werden in bekannter Weise hergestellt, z.B. durch Vermischen der Wirkstoffe bzw. der Wirkstoffkombinationen mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln. Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol oder Alkylnaphthaline, chlorierte Aromaten oder chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, Alkohole, wie Butanol oder Glycol sowie deren Ether und Ester, Ketone, wie Aceton, Methylethylketon, Methylisobutylketon oder Cyclohexanon, stark polare Lösungsmittel wie Dimethylformamid und Dimethylsulfoxid, sowie Wasser. Mit verflüssigten gasförmigen Streckmitteln oder Trägerstoffen sind solche Flüssigkeiten gemeint, welche bei normaler Temperatur und unter Normaldruck gasförmig sind, z.B. Aerosol-Treibgase, wie Halogenkohlenwasserstoffe, sowie Butan, Propan, Stickstoff und Kohlendioxid. Als feste Trägerstoffe kommen in Frage: z.B. natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate. Als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengel.

Als Emulgier- und/oder schaumerzeugende Mittel kommen in Frage: z.B. nichtionogene und anionische Emulgatoren, wie Polyoxyethylen-Fettsäureester, Polyoxyethylen-Fettalkoholether, z.B. Alkylarylpolyglycol-ether, Alkylsulfonate, Alkylsulfate, Arylsulfonate sowie Eiweißhydrolysate. Als Dispergiermittel kommen in Frage: z.B. Lignin-Sulfitablaugen und Methylcellulose.

Es können in den Formulierungen Haftmittel wie Carboxymethylcellulose, natürliche und synthetische pulverige, körnige oder latexförmige Polymere verwendet werden, wie Gummiarabicum, Polyvinylalkohol, Polyvinylacetat, sowie natürliche Phospholipide, wie Kephaline und Lecithine, und synthetische Phospholipide. Weitere Additive können mineralische und vegetabile Öle sein.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe, wie Salze von Eisen, Mangan, Bor, Kupfer, Kobalt, Molybdän und Zink verwendet werden.

Die Formulierungen enthalten im allgemeinen zwischen 0,1 und 95 Gewichtsprozent Wirkstoff, vorzugsweise zwischen 0,5 und 90 %.

Die erfindungsgemäßen Wirkstoffkombinationen können in den Formulierungen in Mischung mit anderen bekannten Wirkstoffen vorliegen, wie Fungizide, Insektizide, Akarizide und Herbizide, sowie in Mischungen mit Düngemitteln oder Pflanzenwachstumsregulatoren.

Die Wirkstoffkombinationen können als solche, in Form ihrer Formulierungen oder den daraus bereiteten Anwendungsformen, wie gebrauchsfertige Lösungen, emulgierbare Konzentrate, Emulsionen, Suspensionen, Spritzpulver, lösliche Pulver und Granulate, angewendet werden.

Die Anwendung geschieht in üblicher Weise, z.B. durch Gießen, Verspritzen, Versprühen, Verstreuen, Verstreichen, Trockenbeizen, Feuchtbeizen, Naßbeizen, Schlämmbeizen oder Inkrustieren.

Bei der Behandlung von Pflanzenteilen können die Wirkstoffkonzentrationen in den Anwendungsformen in einem größeren Bereich variiert werden. Sie liegen im allgemeinen zwischen 1 und 0,0001 Gew.-%, vorzugsweise zwischen 0,5 und 0,001 %.

Bei der Saatgutbehandlung werden im allgemeinen Wirkstoffmengen von 0,001 bis 50 g je Kilogramm Saatgut, vorzugsweise 0,01 bis 10 g benötigt.

Bei Behandlung des Bodens sind Wirkstoffkonzentrationen von 0,00001 bis 0,1 Gew.-%, vorzugsweise von 0,0001 bis 0,02 Gew.-%, am Wirkungsort erforderlich.

Die gute fungizide, sich synergistisch ergänzende Wirkung der erfindungsgemäßen Wirkstoffkombinationen geht aus den nachfolgenden Beispielen hervor. Während die einzelnen Wirkstoffe in der fungiziden Wirkung Schwächen aufweisen, zeigen die Kombinationen eine Wirkung, die über eine einfache Wirkungssummierung hinausgeht.

Ein synergistischer Effekt liegt bei Fungiziden immer dann vor, wenn die fungizide Wirkung der Wirkstoffkombinationen größer ist als die Summe der Wirkungen der einzeln applizierten Wirkstoffe.

Die zu erwartende Wirkung für eine gegebene Kombination zweier Wirkstoffe kann (vgl. Colby, S.R., "Calculating Synergistic and Antagonistic Responses of Herbicide Combinations", Weeds 15, Seiten 20-22, 1967) wie folgt berechnet werden:

Wenn

X den Wirkungsgrad, ausgedrückt in % der unbehandelten Kontrolle, beim Einsatz des Wirkstoffes A in einer Konzentration von m ppm,

Y den Wirkungsgrad, ausgedrückt in % der unbehandelten Kontrolle, beim Einsatz des Wirkstoffes B in einer Konzentration von m ppm,

E den erwarteten Wirkungsgrad, ausgedrückt in % der unbehandelten Kontrolle, beim Einsatz der Wirkstoff A und B in einer Konzentrationen von m und n ppm bedeutet,

$$E=X+Y-\frac{X \cdot Y}{100}$$

dann ist

Ist die tatsächliche fungizide Wirkung größer als berechnet, so ist die Kombination in ihrer Wirkung überadditiv, d.h. es liegt ein synergistischer Effekt vor. In diesem Fall muß der tatsächlich beobachtete Wirkungsgrad größer sein als der aus der oben angeführten Formel errechnete Wert fiir den erwarteten Wirkungsgrad (E):

## Beispiel 1

### Phytophthora-Test (Tomate) / protektiv

Zur Prüfung auf protektive Wirksamkeit werden junge Pflanzen mit der handelsüblichen Wirkstoffzubereitung in der angegebenen Aufwandmenge besprüht. Nach Antrocknen des Spritzbelages werden die Pflanzen mit einer wäßrigen Sporensuspension von Phytophthora infestans inokuliert. Die Pflanzen werden dann in einer Inkubationskabine bei ca. 20°C und 100% relativer Luftfeuchtigkeit aufgestellt.

3 Tage nach der Inokulation erfolgt die Auswertung. Dabei bedeutet 0% ein Wirkungsgrad, der demjenigen der Kontrolle entspricht, während ein Wirkungsgrad von 100% bedeutet, daß kein Befall beobachtet wird.

Die gute fungizide Wirkung der erfindungsgemäßen Wirkstoffkombinationen geht aus dem nachfolgenden Beispiel hervor. Während die einzelnen Wirkstoffe in der fungiziden Wirkung Schwächen aufweisen, zeigen die Kombinationen eine Wirkung, die über eine einfache Wirkungssummierung hinausgeht.

Ein synergistischer Effekt liegt bei Fungiziden immer dann vor, wenn die fungizide Wirkung der Wirkstoffkombinationen größer ist als die Summe der Wirkungen der einzelnen applizierten Wirkstoffe.

Die zu erwartende Wirkung für eine gegebene Kombination zweier Wirkstoffe kann (vgl. Colby, S.R., "Calculating Synergistic and Antagonistic Responses of Herbicide Combinations", Weeds 15, Seiten 20-22, 1967) wie folgt berechnet werden:

Wenn

X den Wirkungsgrad, ausgedrückt in % der unbehandelten Kontrolle, beim Einsatz des Wirkstoffes A in einer Konzentration von m ppm,

Y den Wirkungsgrad, ausgedrückt in % der unbehandelten Kontrolle, beim Einsatz des Wirkstoffes B in einer Konzentration von n ppm,

E den Wirkungsgrad, ausgedrückt in % der unbehandelten Kontrolle, beim Einsatz der Wirkstoffe A und B in Konzentrationen von m und n ppm bedeutet,

dann ist

$$E = X + Y - \frac{X \times Y}{100}$$

Ist die tatsächliche fungizide Wirkung größer als berechnet, so ist die Kombination in ihrer Wirkung überadditiv, d.h. es liegt ein synergistischer Effekt vor. In diesem Fall muß der tatsächlich beobachtete Wirkungsgrad größer sein als der aus der oben angeführten Formel errechnete Wert fiir den erwarteten Wirkungsgrad (E).

Aus der nachfolgenden Tabelle geht eindeutig hervor, daß die gefundene Wirkung der erfindungsgemäßen Wirkstoffkombination größer ist als die berechnete, d.h., daß ein synergistischer Effekt vorliegt.

Tabelle 1

Phytophthora-Test (Tomate) / protektiv

| Wirkstoff | Aufwandmenge an Wirkstoff in g/ha | % Wirkungsgrad |
|---|---|---|
| (I) 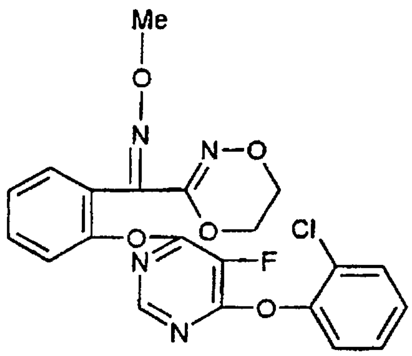 | 0,5 | 9 |
| (χ) 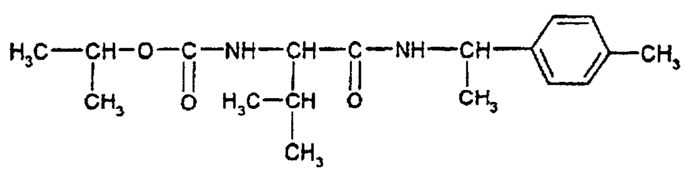 | 0,5 | 20 |

Racemisches Amid von L-Valin

Erfindungsgemäße Mischung:

| | Mischungs-verhältnis | Aufwandmenge an Wirkstoff in g/ha | tatsächlicher Wirkungsgrad | Erwartungswert, berechnet mit Colby-Formel |
|---|---|---|---|---|
| (I) + (χ) | 1:1 | 0,5 + 0,5 | 77 | 27 |

Tabelle 1 - Fortsetzung

Phytophthora-Test (Tomate) / protektiv

| Wirkstoff | Aufwandmenge an Wirkstoff in g/ha | % Wirkungsgrad |
|---|---|---|
| (I) 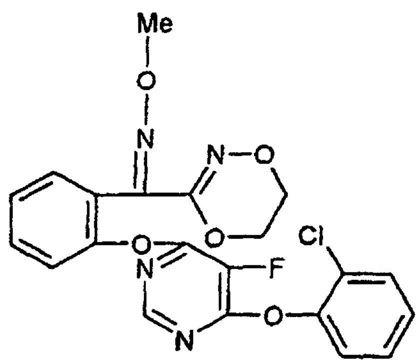 | 5 | 45 |
| Tebuconazole (D) 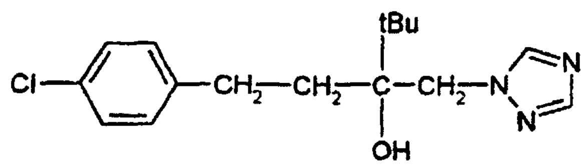 | 5 | 26 |

Erfindungsgemäße Mischung:

| | Mischungsverhältnis | Aufwandmenge an Wirkstoff in g/ha | tatsächlicher Wirkungsgrad | Erwartungswert, berechnet mit Colby-Formel |
|---|---|---|---|---|
| (I) + (D) | 1:1 | 5 + 5 | 84 | 59 |

Tabelle 1 - Fortsetzung

Phytophthora-Test (Tomate) / protektiv

| Wirkstoff | Aufwandmenge an Wirkstoff in g/ha | % Wirkungsgrad |
|---|---|---|
| (I) 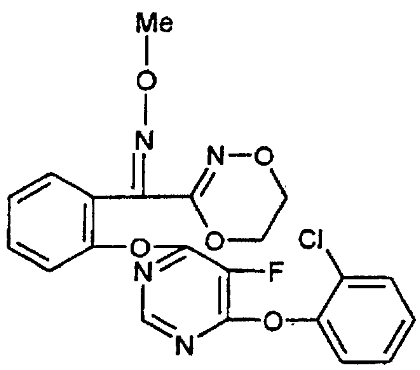 | 5 | 45 |
| Triadimenol (F) 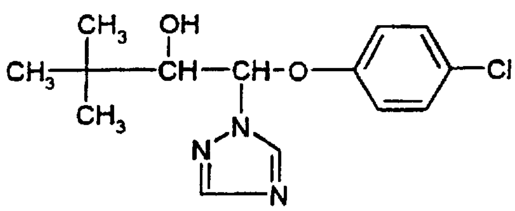 | 5 | 0 |

Erfindungsgemäße Mischung:

| | Mischungs-verhältnis | Aufwandmenge an Wirkstoff in g/ha | tatsächlicher Wirkungsgrad | Erwartungswert, berechnet mit Colby-Formel |
|---|---|---|---|---|
| (I) + (F) | 1:1 | 5 + 5 | 72 | 45 |

Tabelle 1 - Fortsetzung

Phytophthora-Test (Tomate) / protektiv

| Wirkstoff | Aufwandmenge an Wirkstoff in g/ha | % Wirkungsgrad |
|---|---|---|
| (I) 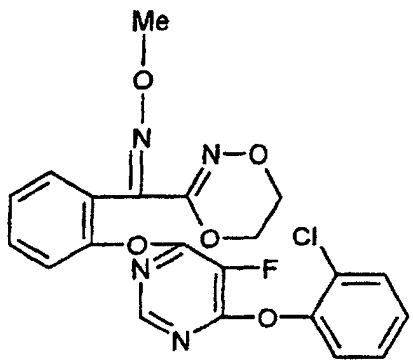 | 5 | 45 |
| (ε) 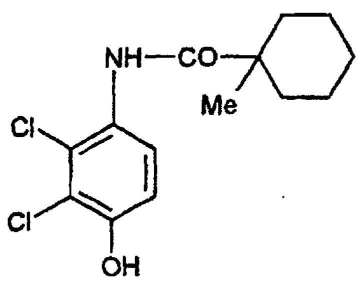 | 5 | 14 |

Erfindungsgemäße Mischung:

| | Mischungs-verhältnis | Aufwandmenge an Wirkstoff in g/ha | tatsächlicher Wirkungsgrad | Erwartungswert, berechnet mit Colby-Formel |
|---|---|---|---|---|
| (I) + (ε) | 1:1 | 5 + 5 | 82 | 53 |

Tabelle 1 - Fortsetzung

Phytophthora-Test (Tomate) / protektiv

| Wirkstoff | Aufwandmenge an Wirkstoff in g/ha | % Wirkungsgrad |
|---|---|---|
| (I) 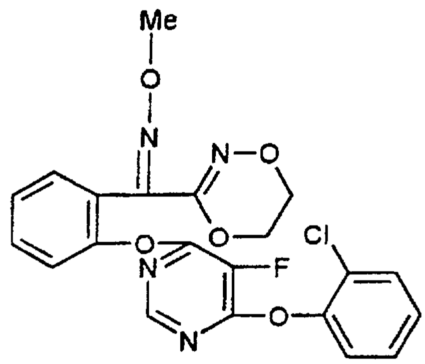 | 5 | 45 |
| (ω) 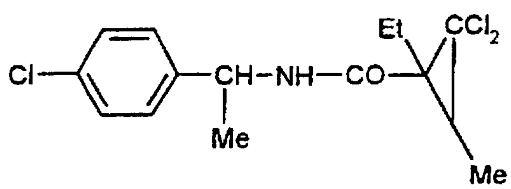 | 5 | 3 |

Erfindungsgemäße Mischung:

| | Mischungs-verhältnis | Aufwandmenge an Wirkstoff in g/ha | tatsächlicher Wirkungsgrad | Erwartungswert, berechnet mit Colby-Formel |
|---|---|---|---|---|
| (I) | 1:1 | 5 | 71 | 47 |
| | | + | | |
| (ω) | | 5 | | |

Tabelle 1 - Fortsetzung

Phytophthora-Test (Tomate) / protektiv

| Wirkstoff | Aufwandmenge an Wirkstoff in g/ha | % Wirkungsgrad |
|---|---|---|
| (I) 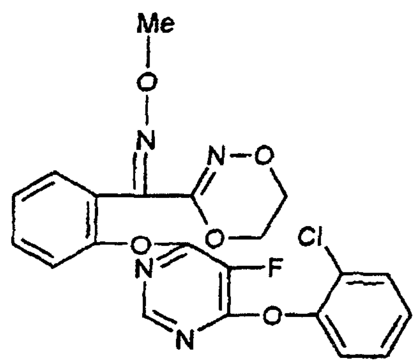 | 5 | 45 |
| (H) 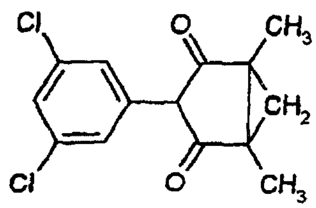 | 5 | 34 |

Erfindungsgemäße Mischung:

| | Mischungsverhältnis | Aufwandmenge an Wirkstoff in g/ha | tatsächlicher Wirkungsgrad | Erwartungswert, berechnet mit Colby-Formel |
|---|---|---|---|---|
| (I) + Procymidone | 1:1 | 5 + 5 | 75 | 64 |

Tabelle 1 - Fortsetzung

Phytophthora-Test (Tomate) / protektiv

| Wirkstoff | Aufwandmenge an Wirkstoff in g/ha | % Wirkungsgrad |
|---|---|---|
| (I) 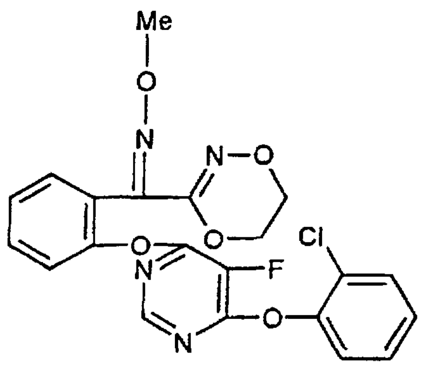 | 5 | 45 |
| Mancozeb (II) 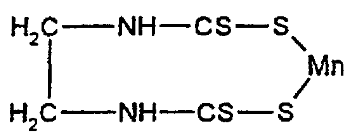 | 50 | 54 |

Erfindungsgemäße Mischung:

| | Mischungs-verhältnis | Aufwandmenge an Wirkstoff in g/ha | tatsächlicher Wirkungsgrad | Erwartungswert, berechnet mit Colby-Formel |
|---|---|---|---|---|
| (I) + Mancozeb (II) | 1:10 | 5 + 50 | 89 | 75 |

Tabelle 1 - Fortsetzung

Phytophthora-Test (Tomate) / protektiv

| Wirkstoff | Aufwandmenge an Wirkstoff in g/ha | % Wirkungsgrad |
|---|---|---|
| (I) 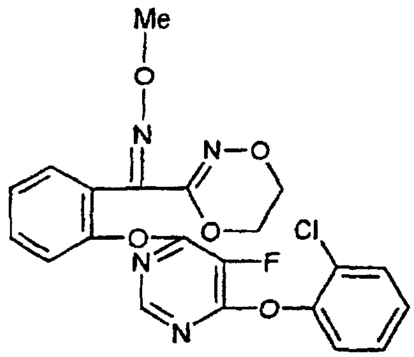 | 1 | 20 |
| Phaltan (K) 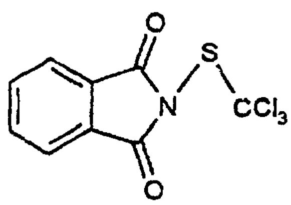 | 10 | 27 |

Erfindungsgemäße Mischung:

| | Mischungs-verhältnis | Aufwandmenge an Wirkstoff in g/ha | tatsächlicher Wirkungsgrad | Erwartungswert, berechnet mit Colby-Formel |
|---|---|---|---|---|
| (I) + Phaltan | 1:10 | 1 + 10 | 74 | 42 |

Tabelle 1 - Fortsetzung

Phytophthora-Test (Tomate) / protektiv

| Wirkstoff | Aufwandmenge an Wirkstoff in g/ha | % Wirkungsgrad |
|---|---|---|
| (I) 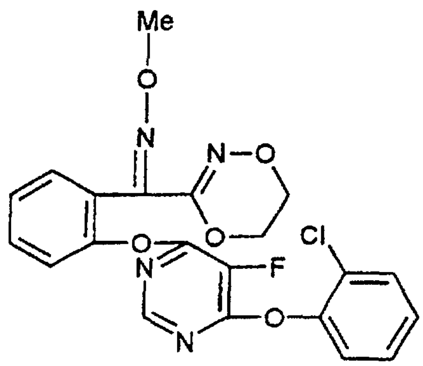 | 1 | 20 |
| Dimetomorph (L) 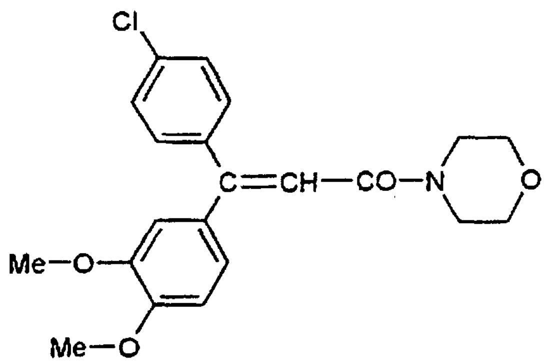 | 1 | 0 |

Erfindungsgemäße Mischung:

| | Mischungs-verhältnis | Aufwandmenge an Wirkstoff in g/ha | tatsächlicher Wirkungsgrad | Erwartungswert, berechnet mit Colby-Formel |
|---|---|---|---|---|
| (I) + Dimetomorph (L) | 1:1 | 1 + 1 | 49 | 20 |

Tabelle 1 - Fortsetzung

Phytophthora-Test (Tomate) / protektiv

| Wirkstoff | Aufwandmenge an Wirkstoff in g/ha | % Wirkungsgrad |
|---|---|---|
| (I) 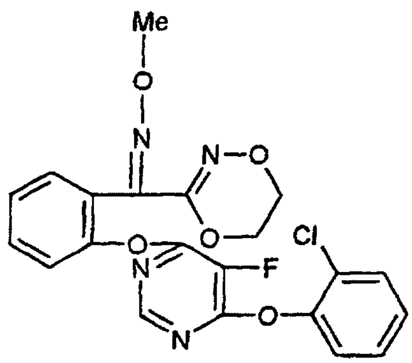 | 5 | 45 |
| Cymoxanil (M) 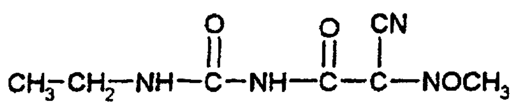 | 5 | 12 |

Erfindungsgemäße Mischung:

| | Mischungs-verhältnis | Aufwandmenge an Wirkstoff in g/ha | tatsächlicher Wirkungsgrad | Erwartungswert, berechnet mit Colby-Formel |
|---|---|---|---|---|
| (I) + Cymoxanil | 1:1 | 5 + 5 | 78 | 52 |

Tabelle 1 - Fortsetzung

Phytophthora-Test (Tomate) / protektiv

| Wirkstoff | Aufwandmenge an Wirkstoff in g/ha | % Wirkungsgrad |
|---|---|---|
| (I) 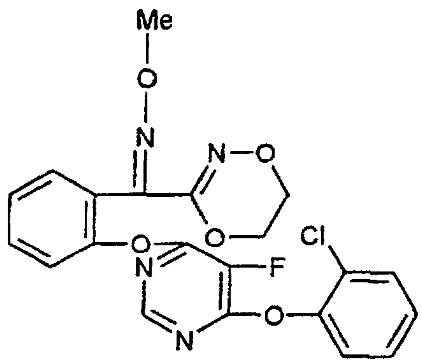 | 5 | 45 |
| Metalaxyl (N) 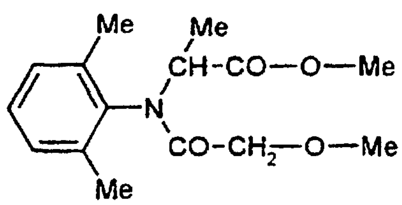 | 5 | 1 |

Erfindungsgemäße Mischung:

| | Mischungsverhältnis | Aufwandmenge an Wirkstoff in g/ha | tatsächlicher Wirkungsgrad | Erwartungswert, berechnet mit Colby-Formel |
|---|---|---|---|---|
| (I) + (N) | 1:1 | 5 + 5 | 62 | 46 |

Tabelle 1 - Fortsetzung

Phytophthora-Test (Tomate) / protektiv

| Wirkstoff | Aufwandmenge an Wirkstoff in g/ha | % Wirkungsgrad |
|---|---|---|
| (I) 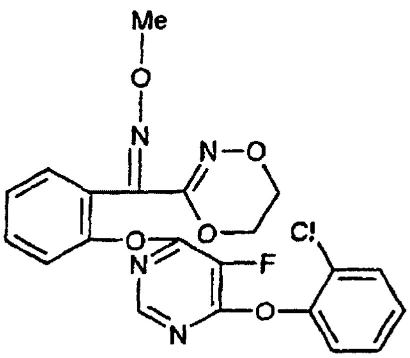 | 5 | 45 |
| Fluazinam (π) 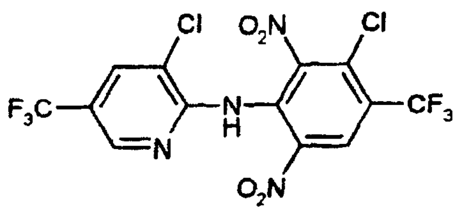 | 5 | 11 |

Erfindungsgemäße Mischung:

| | Mischungs-verhältnis | Aufwandmenge an Wirkstoff in g/ha | tatsächlicher Wirkungsgrad | Erwartungswert, berechnet mit Colby-Formel |
|---|---|---|---|---|
| (I) + Fluazinam (π) | 1:1 | 5 + 5 | 85 | 51 |

Tabelle 1 - Fortsetzung

Phytophthora-Test (Tomate) / protektiv

| Wirkstoff | Aufwandmenge an Wirkstoff in g/ha | % Wirkungsgrad |
|---|---|---|
| (I) 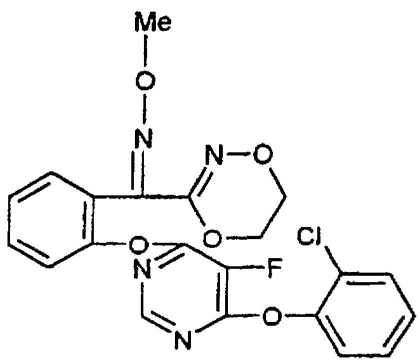 | 5 | 45 |
| Cyprodinyl (R) 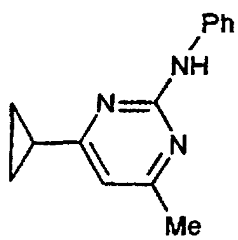 | 5 | 0 |

Erfindungsgemäße Mischung:

| | Mischungs-verhältnis | Aufwandmenge an Wirkstoff in g/ha | tatsächlicher Wirkungsgrad | Erwartungswert, berechnet mit Colby-Formel |
|---|---|---|---|---|
| (I) + Cyprodinyl | 1:1 | 5 + 5 | 62 | 45 |

Tabelle 1 - Fortsetzung

Phytophthora-Test (Tomate) / protektiv

| Wirkstoff | Aufwandmenge an Wirkstoff in g/ha | % Wirkungsgrad |
|---|---|---|
| (I) 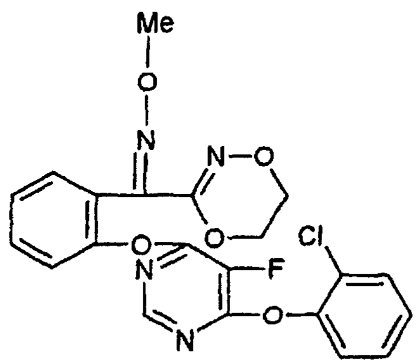 | 1 | 20 |
| Kresoxim-methyl (T) 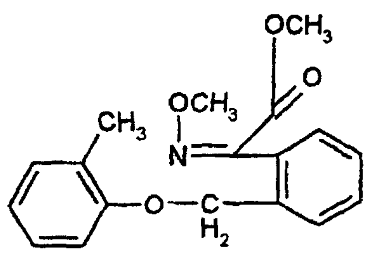 | 1 | 14 |

Erfindungsgemäße Mischung:

| | Mischungs-verhältnis | Aufwandmenge an Wirkstoff in g/ha | tatsächlicher Wirkungsgrad | Erwartungswert, berechnet mit Colby-Formel |
|---|---|---|---|---|
| (I) + Kresoxim-methyl (T) | 1:1 | 1 + 1 | 64 | 31 |

Tabelle 1 - Fortsetzung

Phytophthora-Test (Tomate) / protektiv

| Wirkstoff | Aufwandmenge an Wirkstoff in g/ha | % Wirkungsgrad |
|---|---|---|
| (I) 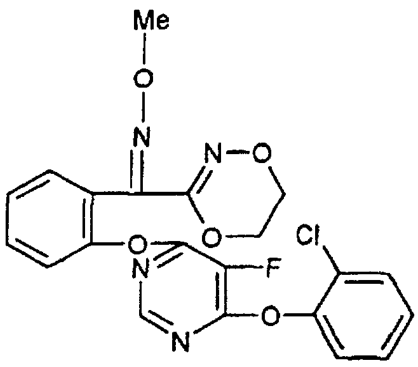 | 5 | 45 |
| Bendicar (Bion) (ß) | 5 | 0 |

Erfindungsgemäße Mischung:

| | Mischungs-verhältnis | Aufwandmenge an Wirkstoff in g/ha | tatsächlicher Wirkungsgrad | Erwartungswert, berechnet mit Colby-Formel |
|---|---|---|---|---|
| (I) + Bendicar | 1:1 | 5 + 5 | 54 | 45 |

**Beispiel 2**

**Sphaerotheca-Test (Gurke) / protektiv**

Zur Prüfung auf protektive Wirksamkeit werden junge Pflanzen mit der handelsüblichen Wirkstoffzubereitung in der angegebenen Aufwandmenge besprüht. Nach Antrocknen des Spritzbelages werden die Pflanzen mit einer wäßrigen Sporensuspension von Sphaerotheca fuliginea inokuliert. Die Pflanzen werden dann bei ca. 23 °C und einer relativen Luftfeuchtigkeit von ca. 70% im Gewächshaus aufgestellt.

10 Tage nach der Inokulation erfolgt die Auswertung. Dabei bedeutet 0% ein Wirkungsgrad, der demjenigen der Kontrolle entspricht, während ein Wirkungsgrad von 100% bedeutet, daß kein Befall beobachtet wird.

Die gute fungizide Wirkung der erfindungsgemäßen Wirkstoffkombinationen geht aus dem nachfolgenden Beispiel hervor. Während die einzelnen Wirkstoffe in der fungiziden Wirkung Schwächen aufweisen, zeigen die Kombinationen eine Wirkung, die über eine einfache Wirkungssummierung hinausgeht.

Ein synergistischer Effekt liegt bei Fungiziden immer dann vor, wenn die fungizide Wirkung der Wirkstoffkombinationen größer ist als die Summe der Wirkungen der einzelnen applizierten Wirkstoffe.

Die zu erwartende Wirkung für eine gegebene Kombination zweier Wirkstoffe kann (vgl. Colby, S.R., "Calculating Synergistic and Antagonistic Responses of Herbicide Combinations", Weeds 15, Seiten 20-22, 1967) wie folgt berechnet werden:

Wenn

x den Wirkungsgrad, ausgedrückt in % der unbehandelten Kontrolle, beim Einsatz des Wirkstoffes A in einer Konzentration von m ppm,

Y den Wirkungsgrad, ausgedrückt in % der unbehandelten Kontrolle, beim Einsatz des Wirkstoffes B in einer Konzentration von n ppm,

E den Wirkungsgrad, ausgedrückt in % der unbehandelten Kontrolle, beim Einsatz der Wirkstoffe A und B in Konzentrationen von m und n ppm bedeutet,
dannist

$$E=X+Y-\frac{X \times Y}{100}$$

Ist die tatsächliche fungizide Wirkung größer als berechnet, so ist die Kombination in ihrer Wirkung überadditiv, d.h. es liegt ein synergistischer Effekt vor. In diesem Fall muß der tatsächlich beobachtete Wirkungsgrad größer sein als der aus der oben angeführten Formel errechnete Wert für den erwarteten Wirkungsgrad (E).

Aus der nachfolgenden Tabelle geht eindeutig hervor, daß die gefundene Wirkung der erfindungsgemäßen Wirkstoffkombination größer ist als die berechnete, d.h., daß ein synergistischer Effekt vorliegt.

<u>Tabelle 2</u>

Sphaerotheca-Test (Gurke) / protektiv

| Wirkstoff | Aufwandmenge an Wirkstoff in g/ha | % Wirkungsgrad |
|---|---|---|
| (I) 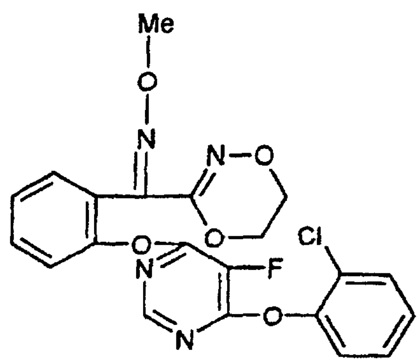 | 2,5 | 22 |
| Propineb (A) 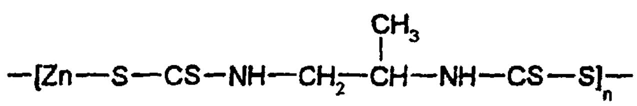 n = > 1 | 25 | 45 |

<u>Erfindungsgemäße Mischung</u>:

| | Mischungs-verhältnis | Aufwandmenge an Wirkstoff in g/ha | tatsächlicher Wirkungsgrad | Erwartungswert, berechnet mit Colby-Formel |
|---|---|---|---|---|
| (I) + Propineb | 1:10 | 2,5 + 25 | 77 | 56 |

Tabelle 2 - Fortsetzung

Sphaerotheca-Test (Gurke) / protektiv

| Wirkstoff | Aufwandmenge an Wirkstoff in g/ha | % Wirkungsgrad |
|---|---|---|
| (I) 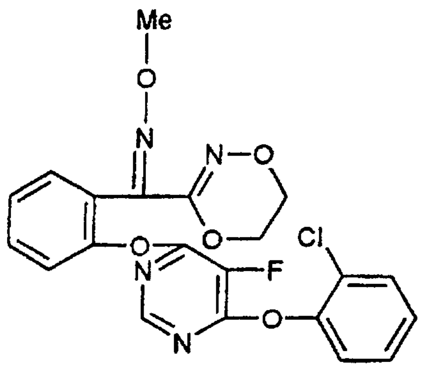 | 2,5 | 22 |
| Dichlofluanid (B1) 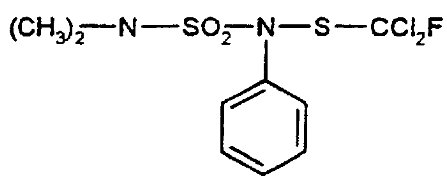 | 25 | 20 |

Erfindungsgemäße Mischung:

| | Mischungs-verhältnis | Aufwandmenge an Wirkstoff in g/ha | tatsächlicher Wirkungsgrad | Erwartungswert, berechnet mit Colby-Formel |
|---|---|---|---|---|
| (I) + Dichlofluanid | 1:10 | 2,5 + 25 | 57 | 38 |

Tabelle 2 - Fortsetzung

Sphaerotheca-Test (Gurke) / protektiv

| Wirkstoff | | Aufwandmenge an Wirkstoff in g/ha | % Wirkungsgrad |
|---|---|---|---|
| (I) | 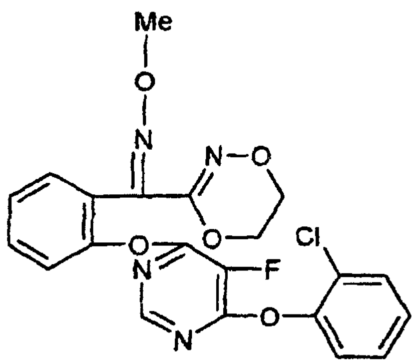 | 2,5 | 22 |
| Tolylfluanid (B2) | 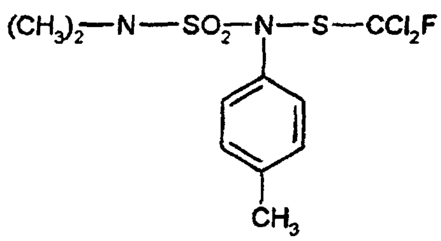 | 25 | 22 |

Erfindungsgemäße Mischung:

| | Mischungs-verhältnis | Aufwandmenge an Wirkstoff in g/ha | tatsächlicher Wirkungsgrad | Erwartungswert, berechnet mit Colby-Formel |
|---|---|---|---|---|
| (I) + Tolylfluanid | 1:10 | 2,5 + 25 | 57 | 39 |

Tabelle 2 - Fortsetzung

Sphaerotheca-Test (Gurke) / protektiv

| Wirkstoff | Aufwandmenge an Wirkstoff in g/ha | % Wirkungsgrad |
|---|---|---|
| (I) 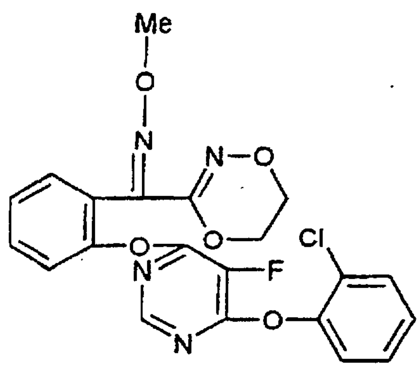 | 2,5 | 22 |
| Bitertanol (C) 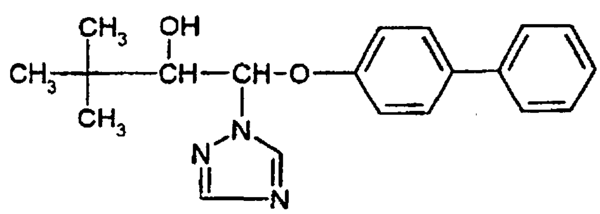 | 2,5 | 20 |

Erfindungsgemäße Mischung:

| | Mischungs-verhältnis | Aufwandmenge an Wirkstoff in g/ha | tatsächlicher Wirkungsgrad | Erwartungswert, berechnet mit Colby-Formel |
|---|---|---|---|---|
| (I) + Bitertanol | 1:1 | 2,5 + 2,5 | 50 | 38 |

Tabelle 2 - Fortsetzung

Sphaerotheca-Test (Gurke) / protektiv

| Wirkstoff | Aufwandmenge an Wirkstoff in g/ha | % Wirkungsgrad |
|---|---|---|
| (I) 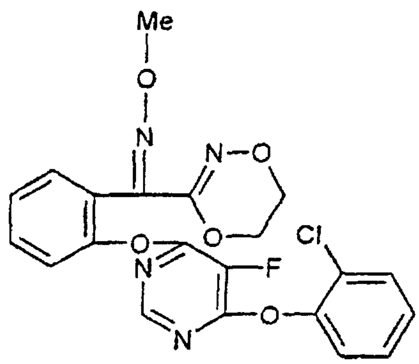 | 2,5 | 22 |
| Triadimefon (E) 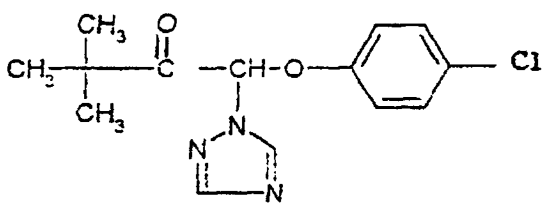 | 2,5 | 30 |

Erfindungsgemäße Mischung:

| | Mischungs-verhältnis | Aufwandmenge an Wirkstoff in g/ha | tatsächlicher Wirkungsgrad | Erwartungswert, berechnet mit Colby-Formel |
|---|---|---|---|---|
| (I) + Triadimefon | 1:1 | 2,5 + 2,5 | 67 | 45 |

Tabelle 2 - Fortsetzung

Sphaerotheca-Test (Gurke) / protektiv

| Wirkstoff | Aufwandmenge an Wirkstoff in g/ha | % Wirkungsgrad |
|---|---|---|
| (I) 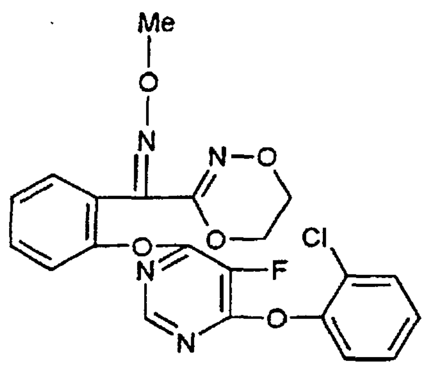 | 2,5 | 22 |
| (δ) 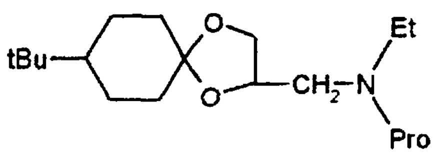 | 2,5 | 10 |

Erfindungsgemäße Mischung:

| | Mischungsverhältnis | Aufwandmenge an Wirkstoff in g/ha | tatsächlicher Wirkungsgrad | Erwartungswert, berechnet mit Colby-Formel |
|---|---|---|---|---|
| (I)<br>+<br>(δ) | 1:1 | 2,5<br>+<br>2,5 | 70 | 30 |

Tabelle 2 - Fortsetzung

Sphaerotheca-Test (Gurke) / protektiv

| Wirkstoff | Aufwandmenge an Wirkstoff in g/ha | % Wirkungsgrad |
|---|---|---|
| (I) 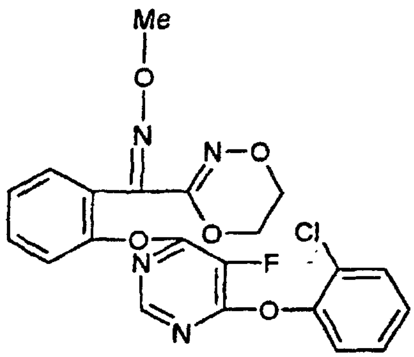 | 2,5 | 22 |
| Captan (III) 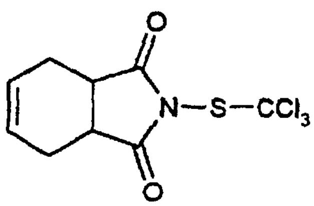 | 12,5 | 0 |

Erfindungsgemäße Mischung:

| | Mischungs-verhältnis | Aufwandmenge an Wirkstoff in g/ha | tatsächlicher Wirkungsgrad | Erwartungswert, berechnet mit Colby-Formel |
|---|---|---|---|---|
| (I) + Captan | 1:5 | 2,5 + 12,5 | 63 | 22 |

Tabelle 2 - Fortsetzung

Sphaerotheca-Test (Gurke) / protektiv

| Wirkstoff | | Aufwandmenge an Wirkstoff in g/ha | % Wirkungsgrad |
|---|---|---|---|
| (I) | 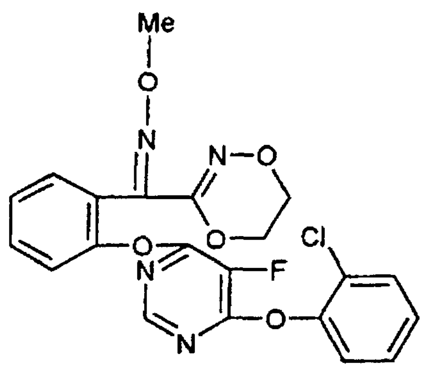 | 2,5 | 22 |
| Pyrimethanil (Q) | 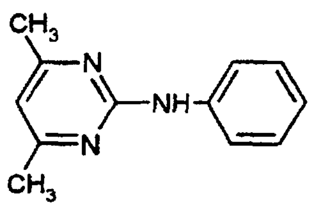 | 12,5 | 10 |

Erfindungsgemäße Mischung:

| | Mischungs-verhältnis | Aufwandmenge an Wirkstoff in g/ha | tatsächlicher Wirkungsgrad | Erwartungswert, berechnet mit Colby-Formel |
|---|---|---|---|---|
| (I) + Pyrimethanil | 1:5 | 2,5 + 12,5 | 57 | 30 |

Tabelle 2 - Fortsetzung

Sphaerotheca-Test (Gurke) / protektiv

| Wirkstoff | Aufwandmenge an Wirkstoff in g/ha | % Wirkungsgrad |
|---|---|---|
| (I) 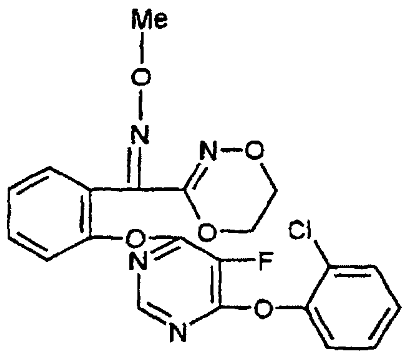 | 2,5 | 22 |
| Azoxystrobin (U) 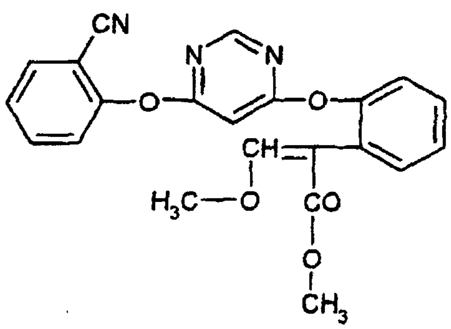 | 2,5 | 57 |

Erfindungsgemäße Mischung:

| | Mischungs-verhältnis | Aufwandmenge an Wirkstoff in g/ha | tatsächlicher Wirkungsgrad | Erwartungswert, berechnet mit Colby-Formel |
|---|---|---|---|---|
| (I) + Azoxystrobin | 1:1 | 2,5 + 2,5 | 83 | 66 |

**Beispiel 3**

**Botrytis - Test (Bohne) / protektiv**

Zur Prüfung auf protektive Wirksamkeit werden junge Pflanzen mit der handelsüblichen Wirkstoffzubereitung in der angegebenen Aufwandmenge besprüht. Nach Antrocknen des Spritzbelages werden auf jedes Blatt 2 kleine mit Botrytis cinerea bewachsene Agarstückchen aufgelegt. Die inokulierten Pflanzen werden in einer abgedunkelten Kammer bei ca. 20°C und 100% relativer Luftfeuchtigkeit aufgestellt.

2 Tage nach der Inokulation wird die Größe der Befallsflecken auf den Blättern ausgewertet. Dabei bedeutet 0% ein Wirkungsgrad, der demjenigen der Kontrolle entspricht, während ein Wirkungsgrad von 100% bedeutet, daß kein Befall beobachtet wird.

Die gute fungizide Wirkung der erfindungsgemäßen Wirkstoffkombinationen geht aus dem nachfolgenden Beispiel hervor. Während die einzelnen Wirkstoffe in der fungiziden Wirkung Schwächen aufweisen, zeigen die Kombinationen eine Wirkung, die über eine einfache Wirkungssummierung hinausgeht.

Ein synergistischer Effekt liegt bei Fungiziden immer dann vor, wenn die fungizide Wirkung der Wirkstoffkombinationen größer ist als die Summe der Wirkungen der einzelnen applizierten Wirkstoffe.

Die zu erwartende Wirkung fiir eine gegebene Kombination zweier Wirkstoffe kann (vgl. Colby, S.R., "Calculating Synergistic and Antagonistic Responses of Herbicide Combinations", Weeds 15, Seiten 20-22, 1967) wie folgt berechnet werden:

Wenn

X den Wirkungsgrad, ausgedrückt in % der unbehandelten Kontrolle, beim Einsatz des Wirkstoffes A in einer Konzentration von m ppm,

Y den Wirkungsgrad, ausgedrückt in % der unbehandelten Kontrolle, beim Einsatz des Wirkstoffes B in einer Konzentration von n ppm,

E den Wirkungsgrad, ausgedrückt in % der unbehandelten Kontrolle, beim Einsatz der Wirkstoffe A und B in Konzentrationen von m und n ppm bedeutet,
dann ist

$$E = X + Y - \frac{X \times Y}{100}$$

Ist die tatsächliche fungizide Wirkung größer als berechnet, so ist die Kombination in ihrer Wirkung überadditiv, d.h. es liegt ein synergistischer Effekt vor. In diesem Fall muß der tatsächlich beobachtete Wirkungsgrad größer sein als der aus der oben angeführten Formel errechnete Wert für den erwarteten Wirkungsgrad (E).

Aus der nachfolgenden Tabelle geht eindeutig hervor, daß die gefundene Wirkung der erfindungsgemäßen Wirkstoffkombination größer ist als die berechnete, d.h., daß ein synergistischer Effekt vorliegt.

Tabelle 3

Botrytis-Test (Bohne) / protektiv

| Wirkstoff | Aufwandmenge an Wirkstoff in g/ha | % Wirkungsgrad |
|---|---|---|
| 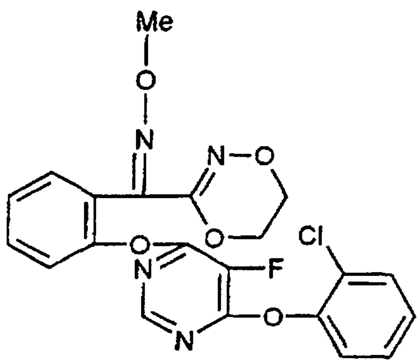 | 50 | 15 |
| Phosethyl-A1 (O) 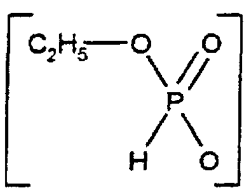 x 3 x Al | 250 | 4 |

Erfindungsgemäße Mischung:

| | Mischungs-verhältnis | Aufwandmenge an Wirkstoff in g/ha | tatsächlicher Wirkungsgrad | Erwartungswert, berechnet mit Colby-Formel |
|---|---|---|---|---|
| (I) + Phosethyl-A1 | 1:5 | 50 + 250 | 55 | 18 |

**Beispiel 4**

Fusarium nivale-Test (Triticale) / Saatgutbehandlung

Die Anwendung der Wirkstoffe erfolgt als Trockenbeizmittel. Sie werden zubereitet durch Abstrecken des

jeweiligen Wirkstoffes mit Gesteinsmehl zu einer feinpulvrigen Mischung, die eine gleichmäßige Verteilung auf der Saatgutoberfläche gewährleitstet.

Zur Beizung schüttelt man das infizierte Saatgut 3 Minuten lang mit dem Beizmittel in einer verschlossenen Glasflasche.

Den Triticale sät man mit 2 x 100 Korn 1 cm tief in eine Standarderde und kultiviert ihn im Gewächshaus bei einer Temperatur von ca. 10°C und einer relativen Luftfeuchtigkeit von ca. 95 % in Saatkästen, die täglich 15 Stunden dem Licht ausgesetzt werden.

Ca. 3 Wochen nach der Aussaat erfolgt die Auswertung der Pflanzen auf Symptome des Schneeschimmels. Dabei bedeutet 0 % ein Wirkungsgrad, der demjenigen der unbehandelten Kontrolle entspricht, während ein Wirkungsgrad von 100 % bedeutet, daß kein Befall beobachtet wird.

Tabelle 4

Fusarium nivale-Test (Triticale) / Saatgutbehandlung

| Wirkstoff | Aufwandmenge an Wirkstoff in mg/kg Saatgut | Wirkungs-grad in % |
|---|---|---|
| 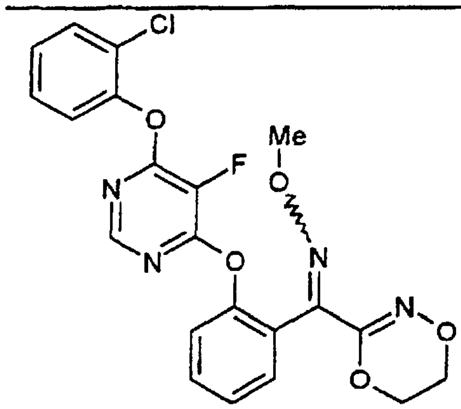 | 75<br>25 | 93<br>89 |
| (Tebuconazole) (O) | 25 | 20 |
| 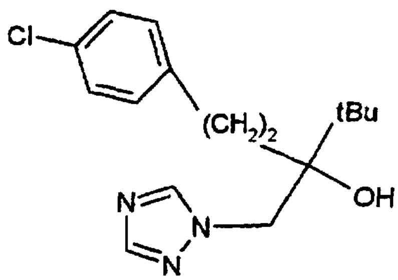 | 25 | 20 |
| (Triadimenol) (F) | 25 | 52 |
| 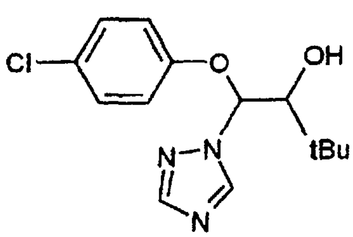 | | |

Tabelle 4 (Fortsetzung)

| Wirkstoff | Aufwandmenge an Wirkstoff in mg/kg Saatgut | Wirkungsgrad in % |
|---|---|---|
| (Pencycuron) IV 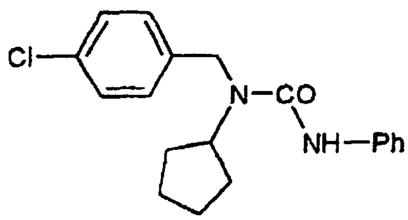 | 25 | 29 |
| (Fenpiclonil) V 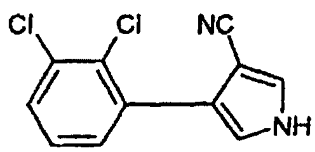 | 75 | 67 |
| (Fludioxonil) (Y) 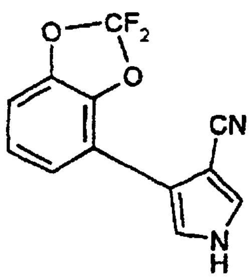 | 75 | 92 |

Tabelle 4 (Fortsetzung)

| Wirkstoff | Aufwandmenge an Wirkstoff in mg/kg Saatgut | Wirkungs-grad in % |
|---|---|---|
| Erfindungsgemäße Mischung | | |
| (I) | 12,5 | 97 |
| (V) | + 12,5 | |
| | | 97 |
| (I) | 12,5 | |
| (F) | + 12,5 | |
| | | 93 |
| (I) | 12,5 | |
| + Monceren | + 12,5 | |
| | | 100 |
| (I) | 37,5 | |
| (V) | + 37,5 | |
| | | 99 |
| (I) | 37,5 | |
| (Y) | + 37,5 | |

**Beispiel 5**

Rhizoctonia solani-Test (Baumwolle) / Saatgutbehandlung

Die Anwendung der Wirkstoffe erfolgt als Trockenbeizmittel. Sie werden zubereitet durch abstrecken des jeweiligen Wirkstoffes mit Gesteinsmehl zu einer feinpulvrigen Mischung, die eine gleichmäßige Verteilung auf der Saatgutoberfläche gewährleistet.

Zur Beizung schüttelt man das infizierte Saatgut 3 Minuten lang mit dem Beizmittel in einer verschlossenen Glasflasche.

Das Saatgut sät man mit 2 x 50 Korn 2 cm tiefin eine mit Rhizoctonia solani infizierte Einheitserde und kultiviert es im Gewächshaus bei einer Temperatur von ca. 22°C in Saatkästen, die täglich 15 Stunden dem Licht ausgesetzt werden.

Nach 8 Tagen erfolgt die Auswertung. Dabei bedeutet 0 % ein Wirkungsgrad, der demjenigen der unbehandelten Kontrolle entspricht, während ein Wirkungsgrad von 100 % bedeutet, daß kein Befall beobachtet wird.

Tabelle 5

Rhizoctonia solani-Test (Baumwolle) / Saatgutbehandlung

| Wirkstoff | Aufwandmenge an Wirkstoff in mg/kg Saatgut | Wirkungsgrad in % |
|---|---|---|
| (I) 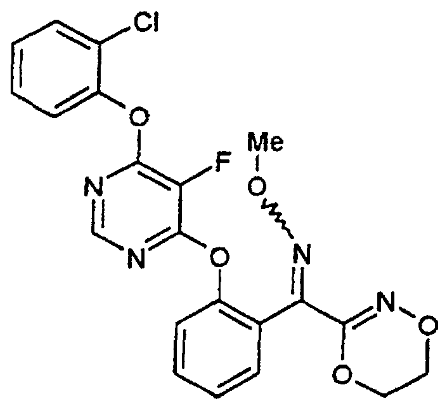 | 75 | 16 |
| (Triadimenol) (F) 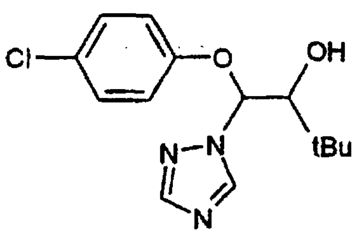 | 75 | 48 |
| Erfindungsgemäße Mischung | | |
| (I) | 37,5 | |
| (F) | + 37,5 | 63 |

**Beispiel 6**

**Erysiphe-Test (Gerste) / kurativ**

| | |
|---|---|
| Lösungsmittel | 25 Gew.-Teile N,N-Dimethylacetamid |
| Emulgatorz | 0,6 Gew.-Teile Alkylarylpolyglykolether |

Zur Herstellung einer zweckmäßigen Wirkstoffzubereitung vermischt man 1 Gewichtsteil Wirkstoff oder Wirkstoffkombination mit den angegebenen Mengen Lösungsmittel und Emulgator und verdünnt das Konzentrat mit Wasser auf die gewünschte Konzentration.

Zur Prüfung auf kurative Wirksamkeit werden junge Pflanzen mit Sporen von Erysiphe graminis f.sp. hordei bestäubt. 48 Stunden nach der Inokulation werden die Pflanzen mit der Wirkstoffzubereitung in der angegebenen Aufwandmenge besprüht.

Die Pflanzen werden in einem Gewächshaus bei einer Temperatur von ca. 20°C und einer relativen Luftfeuchtigkeit von ca. 80 % aufgestellt, um die Entwicklung von Mehltaupusteln zu begünstigen.

7 Tage nach der Inokulation erfolgt die Auswertung. Dabei bedeutet 0 % ein Wirkungsgrad, der demjenigen der Kontrolle entspricht, während ein Wirkungsgrad von 100 % bedeutet, daß kein Befall beobachtet wird.

Tabelle 6

| Erysiphe-Test (Gerste) / kurativ | | |
|---|---|---|
| Wirkstoff | Aufwandmenge an Wirkstoff in g/ha | Wirkungsgrad in % |
| Bekannt: | | |
| (I) | 25 | 75 |
| | 12,5 | 33 |
| | 6,25 | 0 |
| (D) | 25 | 83 |
| | 6,25 | 33 |
| (F) | 6,25 | 67 |
| (V) | 12,5 | 92 |
| (W) | 6,25 | 33 |
| (T) | 12,5 | 67 |
| (δ) | 6,25 | 0 |
| Erfindungsgemäße Mischungen: | | |
| (I) + (D) | 6,25 + 18,75 | 100 |
| | 3,125 + 3,125 | 75 |
| | 18,75 + 6,25 | 92 |
| (I) + (F) | 1,563 + 4,687 | 83 |
| (I) + (T) | 6,25 + 6,25 | 75 |
| | 3,125 + 9,375 | 83 |
| | 9,375 + 3,125 | 83 |
| (I) + (V) | 6,25 + 6,25 | 100 |
| | 3,125 + 9,375 | 100 |
| (I) + (W) | 1,563 + 4,687 | 67 |
| (I) + (δ) | 3,125 + 3,125 | 50 |
| | 1,563 + 4,687 | 83 |

**Beispiel 7**

**Erysiphe-Test (Weizen) / kurativ**

| | |
|---|---|
| Lösungsmittel | 25 Gew.-Teile N,N-Dimethylacetamid |
| Emulgator | 0,6 Gew.-Teile Alkylarylpolyglykolether |

Zur Herstellung einer zweckmäßigen Wirkstoffzubereitung vermischt man 1 Gewichtsteil Wirkstoff oder Wirkstoffkombination mit den angegebenen Mengen Lösungsmittel und Emulgator und verdünnt das Konzentrat mit Wasser auf die gewünschte Konzentration.

Zur Prüfung auf kurative Wirksamkeit werden junge Pflanzen mit Sporen von Erysiphe graminis f.sp. tritici bestäubt. 48 Stunden nach der Inokulation werden die Pflanzen mit der Wirkstoffzubereitung in der angegebenen Aufwandmenge besprüht.

Die Pflanzen werden in einem Gewächshaus bei einer Temperatur von ca. 20°C und einer relativen Luftfeuchtigkeit von ca. 80 % aufgestellt, um die Entwicklung von Mehltaupusteln zu begünstigen.

7 Tage nach der Inokulation erfolgt die Auswertung. Dabei bedeutet 0% ein Wirkungsgrad, der demjenigen der Kontrolle entspricht, während ein Wirkungsgrad von 100 % bedeutet, daß kein Befall beobachtet wird.

Tabelle 7

| Wirkstoff | Aufwandmenge an Wirkstoff in g/ha | Wirkungsgrad in % |
|---|---|---|
| Bekannt: | | |
| (I) | 25 | 33 |
| | 6,25 | 0 |
| (T) | 6,25 | 0 |
| (R) | 25 | 17 |
| (Y) | 25 | 0 |
| Erfindungsgemäße Mischungen: | | |
| (I) + (T) | 3,125 + 3,125 | 50 |
| | 4,6875 + 1,5625 | 50 |
| (I) + (R) | 12,5 + 12,5 | 75 |
| | 18,75 + 6,25 | 50 |
| (I) + (Y) | 6,25 + 18,75 | 50 |
| | 18,75 + 6,25 | 50 |

**Beispiel 8**

**Leptosphaeria nodorum-Test (Weizen) / kurativ**

| | |
|---|---|
| Lösungsmittel | 25 Gewichtsteile N,N-Dimethylacetamid |
| Emulgator | 0,6 Gewichtsteile Alkylarylpolyglykolether |

Zur Herstellung einer zweckmäßigen Wirkstoffzubereitung vermischt man 1 Gewichtsteil Wirkstoff oder Wirkstoflkombination mit den angegebenen Mengen Lösungsmittel und Emulgator und verdünnt das Konzentrat mit Wasser auf die gewünschte Konzentration.

Zur Prüfung auf kurative Wirksamkeit werden junge Pflanzen mit einer KonidienSuspension von Leptosphaeria nodorum besprüht. Die Pflanzen verbleiben 48 Stunden bei 20°C und 100 % relativer Luftfeuchtigkeit in einer Inkubationskabine und werden dann mit der Wirkstoffzubereitung in der angegebenen Aufwandmenge besprüht.

Die Pflanzen werden im Gewächshaus bei einer Temperatur von ca. 15°C und einer relativen Luftfeuchtigkeit von ca. 80 % aufgestellt.

10 Tage nach der Inokulation erfolgt die Auswertung. Dabei bedeutet 0 % ein Wirkungsgrad, der demjenigen

der Kontrolle entspricht, während ein Wirkungsgrad von 100 % bedeutet, daß kein Befall beobachtet wird.

Tabelle 8

| Leptosphaeria nodorum-Test (Weizen) / kurativ | | |
|---|---|---|
| Wirkstoff | Aufwandmenge an Wirkstoff in g/ha | Wirkungsgrad in % |
| Bekannt: | | |
| (I) | 12,5 | 62 |
| | 6,25 | 62 |
| (F) | 6,25 | 25 |
| (W) | 12,5 | 25 |
| (T) | 12,5 | 50 |
| (δ) | 12,5 | 25 |
| (R) | 6,25 | 50 |
| Erfindungsgemäße Mischungen: | | |
| (I) + (F) | 4,6875 + 1,5625 | 75 |
| (I) + (W) | 9,375 + 3,125 | 75 |
| (I) + (T) | 9,3 75 + 3,125 | 75 |
| (I) + (δ) | 9,375 + 3,125 | 75 |
| (I) + (R) | 1,5625 + 4,6875 | 75 |

**Beispiel 9**

**Pyrenophora teres-Test (Gerste) / kurativ**

| | |
|---|---|
| Lösungsmittel | 25 Gewichtsteile N,N-Dimethylacetamid |
| Emulgator | 0,6 Gewichtsteile Alkylarylpolyglykolether |

Zur Herstellung einer zweckmäßigen Wirkstoffzubereitung vermischt man 1 Gewichtsteil Wirkstoff oder Wirkstoffkombination mit den angegebenen Mengen Lösungsmittel und Emulgator und verdünnt das Konzentrat mit Wasser auf die gewünschte Konzentration.

Zur Prüfung auf kurative Wirksamkeit werden junge Pflanzen mit einer KonidienSuspension von Pyrenophora teres besprüht. Die Pflanzen verbleiben 48 Stunden bei 20°C und 100 % relativer Luftfeuchtigkeit in einer Inkubationskabine. Anschließend werden die Pflanzen mit der Wirkstoffzubereitung in der angegebenen Aufwandmenge besprüht.

Die Pflanzen werden in einem Gewächshaus bei einer Temperatur von ca. 20°C und relativen Luftfeuchtigkeit von ca. 80 % aufgestellt.

7 Tage nach der Inokulation erfolgt die Auswertung. Dabei bedeutet 0 % ein Wirkungsgrad, der demjenigen der Kontrolle entspricht, während ein Wirkungsgrad von 100 % bedeutet, daß kein Befall beobachtet wird.

Tabelle 9

| Wirkstoff | Aufwandmenge an Wirkstoff in g/ha | Wirkungsgrad in % |
|---|---|---|
| Bekannt: | | |
| (I) | 6,25 | 0 |
| (F) | 6,25 | 0 |
| Erfindungsgemäße Mischungen: | | |
| (I) +(F) | 4,6875 + 1,5625 | 50 |

**Beispiel 10**

**Puccinia-Test (Weizen) / kurativ**

| | |
|---|---|
| Lösungsmittel | 25 Gewichtsteile N,N-Dimethylacetamid |
| Emulgator | 0,6 Gewichtsteile Alkylarylpolyglykolether |

Zur Herstellung einer zweckmäßigen Wirkstoffzubereitung vermischt man 1 Gewichtsteil Wirkstoff oder Wirkstoffkombination mit den angegebenen Mengen Lösungsmittel und Emulgator und verdünnt das Konzentrat mit Wasser auf die gewünschte Konzentration.
Zur Prüfung auf kurative Wirksamkeit werden junge Pflanzen mit einer Konidiensuspension von Puccinia recondita besprüht. Die Pflanzen verbleiben 48 Stunden bei 20°C und 100 % relativer Luftfeuchte in einer Inkubationskabine. Anschließend werden die Pflanzen mit der Wirkstoffzubereitung in der angegebenen Aufwandmenge besprüht.
Die Pflanzen werden in einem Gewächshaus bei einer Temperatur von ca. 20°C und einer relativen Luftfeuchtigkeit von ca. 80 % aufgestellt, um die Entwicklung von Rostpusteln zu begünstigen.
10 Tage nach der Inokulation erfolgt die Auswertung. Dabei bedeutet 0 % ein Wirkungsgrad, der demjenigen der Kontrolle entspricht, während ein Wirkungsgrad von 100 % bedeutet, daß kein Befall beobachtet wird.

Tabelle 10

| Puccinia-Test (Weizen) / kurativ | | |
|---|---|---|
| Wirkstoff | Aufwandmenge an Wirkstoff in g/ha | Wirkungsgrad in % |
| Bekannt: | | |
| (I) | 6,25 | 67 |
| (W) | 6,25 | 50 |
| (R) | 6,25 | 33 |
| Erfindungsgemäße Mischungen: | | |
| (I) + (W) | 1,5625 + 4,6875 | 83 |
| (I) +(R) | 3,125 + 3,125 | 75 |

**Beispiel 11**

**Erysiphe-Test (Weizen) / protektiv**

| | |
|---|---|
| Lösungsmittel | 25 Gew.-Teile N,N-Dimethylacetamid |
| Emulgator | 0,6 Gew.-Teile Alkylarylpolyglykolether |

Zur Herstellung einer zweckmäßigen Wirkstoffzubereitung vermischt man 1 Gewichtsteil Wirkstoff oder Wirkstoffkombination mit den angegebenen Mengen Lösungsmittel und Emulgator und verdünnt das Konzentrat mit Wasser auf die gewünschte Konzentration.
Zur Prüfung auf protektive Wirksamkeit besprüht man junge Pflanzen mit der Wirkstoffzubereitung in der angegebenen Aufwandmenge.
Nach Antrocknen des Spritzbelages werden die Pflanzen mit Sporen von Erysiphe graminis f.sp. tritici bestäubt.
Die Pflanzen werden in einem Gewächshaus bei einer Temperatur von ca. 20°C und einer relativen Lüftfeuchtigkeit von ca. 80 % aufgestellt, um die Entwicklung von Mehltaupusteln zu begünstigen.
7 Tage nach der Inokulation erfolgt die Auswertung. Dabei bedeutet 0 % ein Wirkungsgrad, der demjenigen der Kontrolle entspricht, während ein Wirkungsgrad von 100 % bedeutet, daß kein Befall beobachtet wird.

Tabelle

| Erysiphe-Test (Weizen) / protektiv | | |
|---|---|---|
| Wirkstoff | Aufwandmenge an Wirkstoff in g/ha | Wirkungsgrad in % |
| Bekannt: | | |
| (I) | 25 | 79 |
| | 12,5 | 29 |
| | 6,25 | 0 |
| (D) | 6,25 | 0 |
| (W) | 6,25 | 43 |
| (T) | 25 | 86 |
| (δ) | 6,25 | 14 |
| (R) | 12,5 | 0 |
| Erfindungsgemäße Mischungen: | | |
| (I) + (D) | 1,5625 + 4,6875 | 71 |
| (I) +(W) | 4,6875 + 1,5625 | 57 |
| (I) +(T) | 6,25 + 18,75 | 93 |
| (I) +(δ) | 3,125 + 3,125 | 57 |
| | 1,5625 + 4,6875 | 79 |
| | 4,6875 + 1,5625 | 57 |
| (I) +(R) | 3,125 + 9,375 | 57 |

**Beispiel 12**

**Leptosphaeria nodorum-Test (Weizen) / protektiv**

| | |
|---|---|
| Lösungsmittel | 25 Gewichtsteile N,N-Dimethylacetamid |
| Emulgator | 0,6 Gewichtsteile Alkylarylpolyglykolether |

Zur Herstellung einer zweckmäßigen Wirkstoffzubereitung vermischt man 1 Gewichtsteil Wirkstoff oder Wirkstoffkombination mit den angegebenen Mengen Lösungsmittel und Emulgator und verdünnt das Konzentrat mit Wasser auf die gewünschte Konzentration.

Zur Prüfung auf protektive Wirksamkeit werden junge Pflanzen mit der Wirkstoffzubereitung in der angegebenen Aufwandmenge besprüht. Nach Antrocknen des Spritzbelages werden die Pflanzen mit einer Sporensuspension von Leptosphaeria nodorum besprüht. Die Pflanzen verbleiben 48 Stunden bei 20°C und 100 % relativer Luftfeuchtigkeit in einer Inkubationskabine.

Die Pflanzen werden in einem Gewächshaus bei einer Temperatur von ca. 15°C und einer relativen Luftfeuchtigkeit von 80 % aufgestellt.

10 Tage nach der Inokulation erfolgt die Auswertung. Dabei bedeutet 0 % ein Wirkungsgrad, der demjenigen der Kontrolle entspricht, während ein Wirkungsgrad von 100 % bedeutet, daß kein Befall beobachtet wird.

Tabelle 12

| Leptosphaeria nodorum-Test (Weizen) / protektiv | | |
|---|---|---|
| Wirkstoff | Aufwandmenge an Wirkstoff in g/ha | Wirkungsgrad in % |
| Bekannt: | | |
| (I) | 6,25 | 25 |
| (D) | 6,25 | 25 |
| (F) | 6,25 | 0 |
| (V) | 6,25 | 50 |
| (W) | 6,25 | 50 |
| (T) | 6,25 | 0 |
| (δ) | 6,25 | 25 |
| (R) | 6,25 | 25 |
| (Y) | 6,25 | 25 |
| Erfindungsgemäße Mischungen: | | |
| (I)+(D) | 3,125 + 3,125 | 50 |
| | 4,6875 + 1,5625 | 50 |
| (I)+(F) | 1,5625 + 4,6875 | 50 |
| (I) +(V) | 1,5625 + 4,6875 | 100 |
| (I) +(W) | 3,125 + 3,125 | 100 |
| (I) +(T) | 4,6875 + 1,5625 | 50 |
| (I) +(δ) | 1,5625 + 4,6875 | 75 |
| | 4,6875 + 1,5625 | 100 |
| (I) +(R) | 3,125 + 3,125 | 100 |
| | 1,5625 + 4,6875 | 100 |
| | 4,6875 + 1,5625 | 100 |
| (I) +(Y) | 3,125 + 3,125 | 75 |
| | 1,5625 + 4,6875 | 100 |
| | 4,6875 + 1,5625 | 100 |

**Beispiel 13**

**Puccinia-Test (Weizen) / protektiv**

| | | |
|---|---|---|
| Lösungsmittel | 25 | Gewichtsteile N,N-Dimethylacetamid |
| Emulgator | 0,6 | Gewichtsteile Alkylarylpolyglykolether |

Zur Herstellung einer zweckmäßigen Wirkstoffzubereitung vermischt man 1 Gewichtsteil Wirkstoff oder Wirkstoffkombination mit den angegebenen Mengen Lösungsmittel und Emulgator und verdünnt das Konzentrat mit Wasser auf die gewünschte Konzentration.

Zur Prüfung auf protektive Wirksamkeit werden junge Pflanzen mit der Wirkstoffzubereitung in der angegebenen Aufwandmenge besprüht. Nach Antrocknen des Spritzbelages werden die Pflanzen mit einer Konidiensuspension von Puccinia recondita besprüht. Die Pflanzen verbleiben 48 Stunden bei 20°C und 100 % relativer Luftfeuchtigkeit in einer Inkubationskabine.

Die Pflanzen werden dann in einem Gewächshaus bei einer Temperatur von ca. 20°C und einer relativen Luftfeuchtigkeit von 80 % aufgestellt, um die Entwicklung von Rostpusteln zu begünstigen.

10 Tage nach der Inokulation erfolgt die Auswertung. Dabei bedeutet 0 % ein Wirkungsgrad, der demjenigen der Kontrolle entspricht, während ein Wirkungsgrad von 100 % bedeutet, daß kein Befall beobachtet wird.

Tabelle 13

| **Puccinia-Test (Weizen) / protektiv** | | |
|---|---|---|
| Wirkstoff | Aufwandmenge an Wirkstoff in g/ha | Wirkungsgrad in % |
| Bekannt: | | |
| (I) | 6,25 | 81 |
| (D) | 6,25 | 38 |
| (F) | 6,25 | 13 |
| (V) | 6,25 | 81 |
| (W) | 6,25 | 75 |
| (T) | 6,25 | 25 |
| (δ) | 6,25 | 13 |
| (R) | 6,25 | 13 |
| (Y) | 6,25 | 13 |
| Erfindungsgemäße Mischungen: | | |
| (I) +(D) | 3,125 + 3,125 | 94 |
| | 1,5625 + 4,6875 | 94 |
| | 4,6875 + 1,5625 | 88 |
| (I) +(F) | 3,125 + 3,125 | 88 |
| (I) +(V) | 3,125 + 3,125 | 88 |
| | 1,5625 + 4,6875 | 100 |
| | 4,6875 + 1,5625 | 88 |
| (I) +(W) | 3,125 + 3,125 | 100 |
| | 1,5625 + 4,6875 | 88 |
| | 4,6875 + 1,5625 | 100 |
| (I) +(T) | 4,6875 + 1,5625 | 100 |
| (I)+(δ) | 3,125 + 3,125 | 100 |
| | 1,5625 + 4,6875 | 94 |
| | 4,6875 + 1,5625 | 100 |
| (I)+(R) | 3,125 + 3,125 | 94 |
| | 1,5625 + 4,6875 | 100 |
| | 4,6875 + 1,5625 | 100 |
| (I) +(Y) | 3,125 + 3,125 | 100 |
| | 1,5625 + 4,6875 | 94 |
| | 4,6875 + 1,5625 | 100 |

**Patentansprüche**

**1.** Wirkstoffkombination enthaltend eine Verbindung der Formel (I)

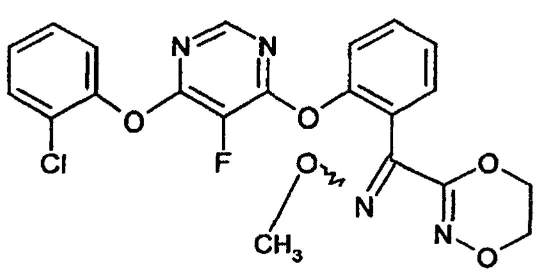

(I)

und mindestens einen Mischpartner

(A) Antracol (Propineb) und/oder
(B) Euparen (Dichlofluanid) und/oder Euparen M (Tolylfluanid) und/oder
(C) Bitertanol und/oder
(D) Tebuconazol und/oder
(E) Triadimefon und/oder
(F) Triadimenol und/oder
(G) Imidacloprid und/oder
(H) Sumisclex und/oder
(II) Mancozeb und/oder
(K) Folpet (Phaltan) und/oder
(L) Dimetomorph und/oder
(M) Cymoxanil und/oder
(N) Metalaxyl und/oder
(O) Aliette (Fosetyl-Al) und/oder
(P) Famoxadone und/oder
(Q) Pyrimethanil und/oder
(R) Cyprodinyl und/oder
(S) Mepanipyrim und/oder
(T) Kresoximmethyl und/oder
(U) Azoxystrobin und/oder
(V) Epoxiconazole und/oder
(W) Metconazole und/oder
(X) Fluquinconazole und/oder
(Y) Fludioxonil und/oder
(Z) Fenpiclonil und/oder
(α) Guazatine und/oder
(β) Bion und/oder
(x)

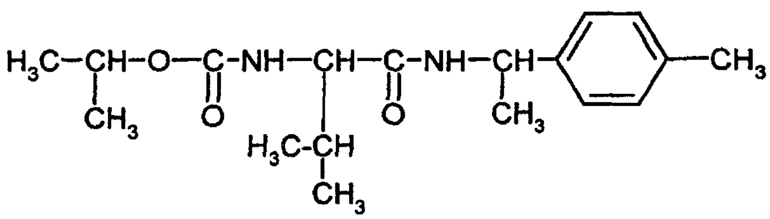

und/oder
(δ) 8-t-Butyl-2-(N-ethyl-N-n-propyl-amino)-methyl-1,4-dioxaspiro[5,4]-decan und/oder
(ε) 2,3-Dichlor4-(1-methylcyclohexylcarbonylamino)-phenol und/oder (ω) N-(R)-[1-(4-Chlor-phenyl)-ethyl]-2,2-dichlor-1-ethyl-3t-methyl-1rcyclopropan-carbonsäureamid und/oder
(π) Fluazinam und/oder
(III) Captan und/oder
(IV) Monceren (Pencycuron).

2. Wirkstoffkombination gemäß Anspruch 1, **dadurch gekennzeichnet, daß** in den Wirkstoffkombinationen das Gewichtsverhältnis von Wirkstoff der Formel (I) zu einem Wirkstoff aus der Gruppe (A) bis (IV) jeweils 1:0,01 bis 1:50 ist.

3. Verfahren zur Bekämpfung von Pilzen, **dadurch gekennzeichnet, daß** man Wirkstoffkombinationen gemäß Anspruch 1 auf die Pilze und/oder deren Lebensraum einwirken läßt.

4. Verwendung von Wirkstoffkombinationen gemäß Anspruch 1 zur Bekämpfung von Pilzen.

5. Verfahren zur Herstellung von fungiziden Mitteln, **dadurch gekennzeichnet, daß** man Wirkstoffkombinationen gemäß Anspruch 1 mit Streckmitteln und/oder oberflächenaktiven Stoffen vermischt.

**6.** Fungizide Mittel enthaltend eine Wirkstoffkombination wie in Anspruch 1 definiert sowie die für fungizide Mittel üblichen Bestandteile.

## Claims

**1.** Active compound combination, comprising a compound of the formula (I)

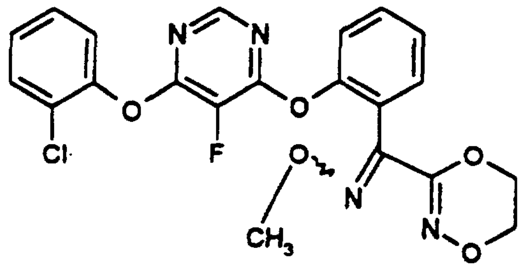

(I)

and at least one mixing partner

(A) Antracol (propineb) and/or
(B) Euparene (dichlorofluanide) and/or Euparene M (tolylfluanide) and/or
(C) bitertanol and/or
(D) tebuconazole and/or
(E) triadimefon and/or
(F) triadimenol and/or
(G) imidacloprid and/or
(H) Sumisclex and/or
(II) mancozeb and/or
(K) folpet (Phaltan) and/or
(L) dimetomorph and/or
(M) cymoxanil and/or
(N) metalaxyl and/or
(O) Aliette (fosetyl-Al) and/or
(P) famoxadone and/or
(Q) pyrimethanil and/or
(R) cyprodinyl and/or
(S) mepanipyrim and/or
(T) kresoxim-methyl and/or
(U) azoxystrobin and/or
(V) epoxiconazole and/or
(W) metconazole and/or
(X) fluquinconazole and/or
(Y) fludioxonil and/or
(Z) fenpiclonil and/or
(α) guazatine and/or
(β) Bion and/or
(χ)

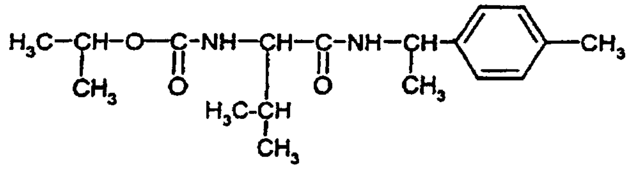

and/or
(δ) 8-t-butyl-2-(N-ethyl-N-n-propyl-amino)-methyl-1,4-dioxaspiro[5.4]decane and/or
(ε) 2,3-dichloro-4-(1-methylcyclohexylcarbonylamino)-phenol and/or
(ω) N- (R)-[1-(4-chloro-phenyl) -ethyl]-2,2-dichloro-1-ethyl-3t-methyl-1r-cyclopropane-carboxamide and/or
(π) fluazinam and/or
(III) captan and/or
(IV) Monceren (pencycuron).

**2.** Active compound combination according to Claim 1, **characterized in that** in the active compound combinations the weight ratio of active compound of the formula (I) to an active compound from the group (A) to (IV) is in each case 1:0.01 to 1:50.

**3.** Method for controlling fungi, **characterized in that** active compound combinations according to Claim 1 are allowed to act on the fungi and/or their habitat.

**4.** Use of active compound combinations according to Claim 1 for controlling fungi.

**5.** Process for preparing fungicidal compositions, **characterized in that** active compound combinations according to Claim 1 are mixed with extenders and/or surfactants.

**6.** Fungicidal compositions, comprising an active compound combination as defined in Claim 1 and components customary for fungicidal compositions.

## Revendications

**1.** Combinaison de substances actives contenant un composé de formule (I)

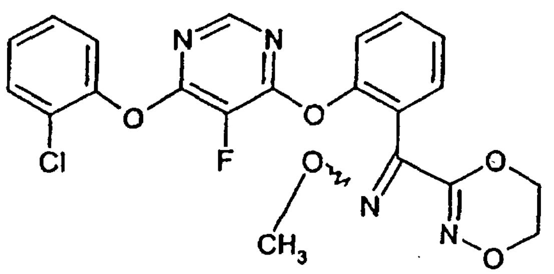

(I)

et au moins un partenaire de mélange

(A) antracol(propinèbe) et/ou
(B) euparène(dichlorfluanide) et/ou euparène M (tolylfluanide) et/ou
(C) bitertanol et/ou
(D) tébuconazole et/ou
(E) triadiméfon et/ou
(F) triadiménol et/ou
(G) imidaclopride et/ou
(H) sumisclex et/ou
(I) mancozèbe et/ou
(K) folpet (phaltane) et/ou
(L) diméthomorphe et/ou
(M) cymoxanil et/ou
(N) métalaxyl et/ou
(O) aliette (fosétyl-Al) et/ou
(P) famoxadone et/ou

(Q) pyriméthanil et/ou
(R) cyprodinyl et/ou
(S) mépanipyrim et/ou
(T) krésoximméthyl et/ou
(U) azoxystrobine et/ou
(V) époxiconazole et/ou
(W) métconazole et/ou
(X) fluquinconazole et/ou
(Y) fludioxonil et/ou
(Z) fenpiclonil et/ou
(α) guazatine et/ou
(β) bione et/ou
(χ)

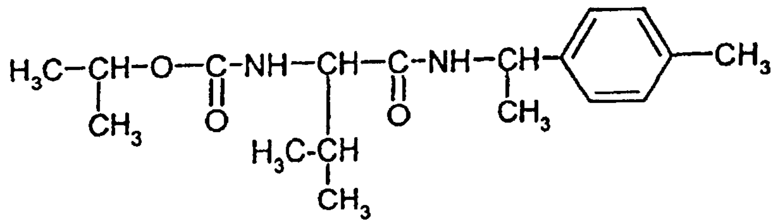

et/ou
(δ) 8-tertio-butyl-2-(N-éthyl-N-n-propylamino)méthyl-1,4-dioxaspiro[5,4]décane et/ou
(ε) 2,3-dichloro-4-(1-méthylcyclohexylcarbonylamino)-phénol et/ou
(ω) N-(R)-[1-(4-chlorophényl)éthyl]-2,2-dichloro-1-éthyl-3-tertio-méthyl-1r-cyclopropane-carboxyamide et/ou
(π) fluazinam et/ou
(III) captane et/ou
(IV) moncérène (pencycuron).

**2.** Combinaison de substances actives suivant la revendication 1, **caractérisée en ce que** le rapport en poids de la substance active de formule (I) à une substance active du groupe (A) à (IV) dans la combinaison va dans chaque cas de 1:0,01 à 1:50.

**3.** Procédé pour combattre des champignons, **caractérisé en ce qu'**on fait agir des combinaisons de substances actives suivant la revendication 1 sur les champignons et/ou sur leur milieu.

**4.** Utilisation de combinaisons de substances actives suivant la revendication 1 pour combattre des champignons.

**5.** Procédé de préparation de compositions fongicides, **caractérisé en ce qu'**on mélange des combinaisons de substances actives suivant la revendication 1 avec des diluants et/ou des agents tensio-actifs.

**6.** Compositions fongicides contenant une combinaison de substances actives telle que définie dans la revendication 1 ainsi que des constituants d'emploi classique pour des compositions fongicides.